# FASCICULE DE BREVET EUROPEEN

(11) **EP 3 850 233 B1**
(45) Date de publication et mention de la délivrance du brevet: **28.06.2023**
(21) Numéro de dépôt: 19779064.5
(22) Date de dépôt: 03.09.2019
(51) Int. Cl.: F16C 27/04, F16C 19/52, F16C 33/58, F16C 35/077, F16C 17/20, F16C 19/22, F16C 35/02, F01D 25/16, F16C 27/02

(54) **SYSTÈME DE RETENUE AXIALE D'UNE BAGUE DE ROULEMENT**
SYSTEM ZUR AXIALEN SICHERUNG EINES RINGES EINES WÄLZLAGERS
SYSTEM FOR THE AXIAL RETENTION OF A RING OF A ROLLING ELEMENT BEARING

(30) Priorité: 13.09.2018 FR 1858242
(43) Date de publication de la demande: 21.07.2021
(73) Titulaire: SAFRAN AIRCRAFT ENGINES, 75015 Paris (FR)
(72) Inventeur: LIMA, Christophe, 77550 MOISSY-CRAMAYEL (FR); BENSALAH, Boucif, 77550 MOISSY-CRAMAYEL (FR); GENDRAUD, Alain, Dominique, 77550 MOISSY-CRAMAYEL (FR); MARTIN MATOS, Alberto, 77550 MOISSY-CRAMAYEL (FR); QUESNEL, Valentin, Olivier, Jean-Jacques, 77550 MOISSY-CRAMAYEL (FR)
(74) Mandataire: Gevers & Orès
(86) Numéro de dépôt international: PCT/FR2019/052025
(87) Numéro de publication internationale: WO 2020/053504

(56) Documents cités:
- FR-A1- 2 960 907
- FR-A1- 3 013 760

## Description

### Domaine de l'invention

La présente invention concerne le domaine des paliers de guidage en rotation d'un arbre rotatif et en particulier des supports de paliers de guidage d'un arbre de turbo machine.

Elle vise notamment un système de retenue axiale d'une bague de roulement de ce palier de guidage et une turbomachine équipée d'un tel système.

### Etat de la technique

Les turbomachines comprennent généralement un ou plusieurs paliers de guidage permettant de guider un arbre rotatif de turbomachine par rapport à une partie fixe, telle qu'un carter fixe de la turbomachine. Ces paliers de guidage comprennent une bague intérieure et une bague extérieure formant des pistes de roulement et enserrant des organes roulants, par exemple des rouleaux ou des billes. Classiquement, la bague extérieure est montée de manière solidaire sur la partie fixe de la turbomachine et la bague intérieure est montée de manière solidaire sur l'arbre rotatif de la turbomachine.

Classiquement, ce type de palier de guidage est un palier ou roulement à rouleaux ou à billes. Ce palier est porté par un support de palier annulaire fixé à un carter fixe de la turbomachine et ayant une certaine souplesse de façon à ce qu'il puisse se déformer lors de la mise en fonctionnement de la turbomachine et permettre ainsi un certain décentrage du palier en cas de balourd. Ce décentrage permet au palier d'assurer une reprise des charges radiales.

Ce palier à rouleaux est lui-même porté par un support annulaire, fixé au carter fixe de la turbomachine, présentant également une certaine souplesse permettant d'éviter certains problèmes de dynamiques. De manière classique et bien connue en soi, ce palier comporte également une bague de maintien annulaire présentant une partie amont rigide formant piste de roulement et une partie aval souple permettant les déformations nécessaires aux reprises des charges radiales. Cette bague de maintien forme la bague externe du palier. Le palier à rouleaux comporte en outre, de manière classique un anneau de roulement rigide agencé radialement entre le support de palier annulaire et la bague de maintien de palier. Cet anneau de roulement solidaire du support de palier permet de maintenir un film d'huile d'amortissement sur la surface externe de la partie amont de la bague de maintien de palier. Ce film fluide d'amortissement est connu sous la désignation anglaise « squeeze film » et permet d'atténuer certaines vibrations de la turbomachine en fonctionnement. Il existe ainsi un jeu entre la bague de maintien de palier et l'anneau de roulement.

En cas de charge radiale importante, la consommation du jeu entre l'anneau de roulement et la bague de maintien de palier peut déclencher un phénomène de reptation. Cette reptation apparaît notamment quand, par exemple, lors d'un cas de panne moteur (par exemple dû à une perte d'aube de soufflante suite à une collision avec un oiseau), la partie amont de la bague de maintien de palier se déplace radialement au sein de l'anneau de roulement et entre contact avec la surface interne de celui-ci, générant un balourd sur la partie aval de la bague. Sous l'effet du balourd, en tournant, il se génère un couple. Lorsque le couple devient trop important, la partie aval de la bague de maintien se rompt. En cas de rupture de la partie aval de la bague de maintien , la partie rigide formant piste de roulement de la bague peut se déplacer axialement vers l'aval jusqu'à la perte de la fonction de support de l'arbre rotatif. Des moyens de rétention de la partie aval de la bague de maintien ont été élaborés par le passé, tel que par exemple illustré dans le document FR 3 013 760 A1.

### Objectif de l'invention

On se propose de trouver une solution technique pour assurer la fonction, même dans les conditions les plus extrêmes, de la bague de maintien, par exemple en cas de perte d'une aube de soufflante.

### Exposé de l'invention

On parvient à cet objectif conformément à l'invention grâce à un système de retenue axiale d'une bague de maintien de palier de guidage en rotation d'un arbre rotatif d'une turbomachine s'étendant suivant un axe selon la revendication indépendante annexée.

Ainsi, cette solution permet d'atteindre l'objectif susmentionné. En particulier en cas d'un endommagement de la bague aval induisant par exemple une compression axiale de ladite bague aval, la bague amont est empêchée de glisser vers l'aval et est malgré tout maintenue dans une position axiale permettant le fonctionnement du palier de guidage.

Le système selon l'invention peut comprendre une ou plusieurs des caractéristiques suivantes, prises isolément les unes des autres ou en combinaison les unes avec les autres :
- les premier et second éléments de retenue axiale sont respectivement venus de matière avec le support de palier et la bague de maintien,
- chacune des dents annulaires du premier élément de retenue s'étend radialement vers l'extérieur de la turbomachine et en ce que chacune des dents annulaires du deuxième élément de retenue s'étend radialement vers l'intérieur de la turbomachine,
- l'au moins un premier élément de retenue axiale du support de palier annulaire est agencé en aval de l'au moins un second élément de retenue axiale de la bague de maintien de palier,
- chaque élément de retenue axiale du support de palier et de la bague de maintien de palier s'étend circonférentiellement selon un plan sensiblement perpendiculaire à l'axe longitudinal et comporte deux extrémités circonférentielles, les extrémités circonférentielles de chaque premier élément de retenue axiale du support de palier comportant, en outre, sur leurs faces amont, chacune un chanfrein,
- les extrémités circonférentielles de chaque dent annulaire de la bague de maintien de palier, en outre, sur leurs faces aval, chacune un chanfrein de manière à coopérer avec chacun des chanfreins de chacune des premier éléments de retenue axiale du support de palier,
- au moins un des éléments de retenue axiale présente une longueur circonférentielle différente de la longueur circonférentielle des autres éléments de retenue axiale,
- le système comporte en outre un anneau de roulement, agencé radialement entre le support de palier annulaire et la bague de maintien de palier, l'anneau de roulement comportant au moins une dent annulaire s'étendant radialement de manière à pouvoir coopérer axialement avec l'au moins un second élément de retenue axiale de la bague de maintien de palier, de manière à former liaison crabot,
- l'au moins un second élément de retenue axiale de la bague de maintien de palier est agencé axialement entre l'au moins un premier élément de retenue axiale du support de palier annulaire et l'au moins un second élément de retenue axiale de l'anneau de roulement,
- la bague aval comprend deux extrémités axiales entre lesquelles s'étendent des colonnettes longitudinales, de manière à permettre une ovalisation de ladite bague aval,
- le palier de guidage comprend un film fluide d'amortissement emprisonné dans une chambre d'amortissement, la chambre d'amortissement étant délimitée radialement entre la bague de maintien et l'anneau de roulement solidaire du support de palier.

L'invention concerne aussi une turbomachine d'aéronef comportant un système de retenue axiale d'une bague de roulement de palier tel que décrit ci-dessus.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
- la figure 1 illustre une coupe longitudinale schématique d'un palier de guidage en rotation d'un arbre de turbomachine comportant un système de retenue axiale selon l'invention,
- la figure 2 est un agrandissement de la coupe schématique de la figure 1,
- la figure 3 est une vue en perspective d'une bague de maintien de palier selon la présente invention,
- la figure 4 est une vue interne d'une partie d'un support de palier selon la présente invention,
- la figure 5 est une vue aval du système de retenue axiale selon l'invention dans une configuration angulaire passante,
- la figure 6 est une coupe longitudinale du système de retenue axiale dans la configuration de la figure 5,
- la figure 7 est une succession de coupes longitudinales du système de retenue axiale selon la présente invention dans une configuration non passante,
- la figure 8 est une vision schématique du fonctionnement du présent système de retenue axiale.

### Description de modes de réalisation de l'invention

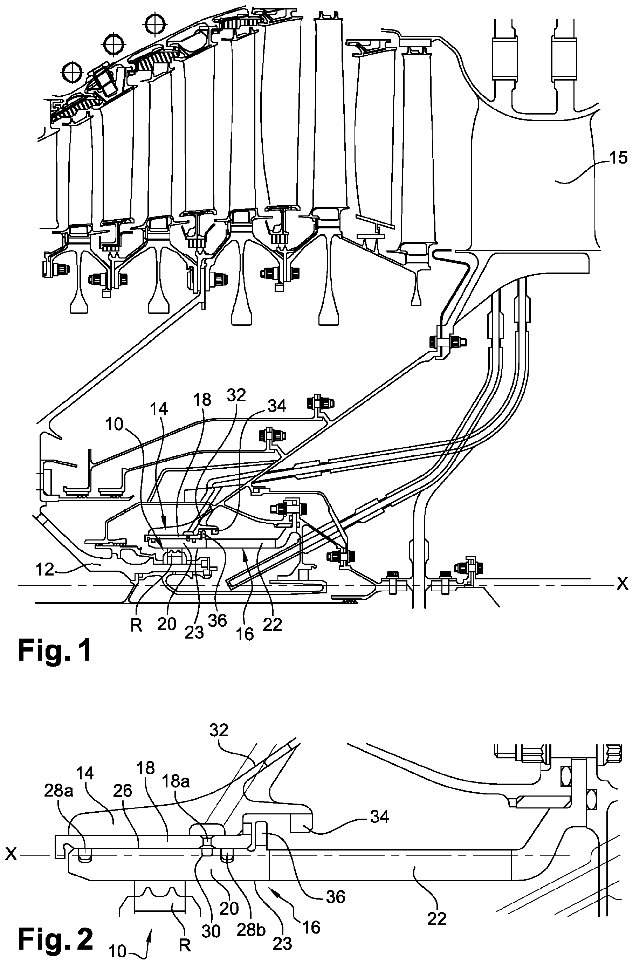

La figure 1 montre l'environnement considéré de la présente invention, un palier de guidage en rotation 10 d'un arbre rotatif 12 de turbomachine. Cet arbre rotatif 12 est par exemple un arbre de compresseur haute-pression de turbomachine. L'arbre rotatif 12 peut être bien entendu tout arbre entraîné en rotation à l'aide d'un palier de guidage au sein de la turbomachine. La turbomachine s'étend classiquement selon un axe de rotation longitudinal X parallèle à la direction d'écoulement des gaz. Dans ce qui suit, les termes « aval » et « amont » sont utilisés en référence à cet axe X et au sens d'écoulement des gaz.

Le palier de guidage en rotation 10 est porté par un support de palier annulaire 14 relativement souple monté autour de l'arbre 12. Le support de palier annulaire 14 présente une forme sensiblement cylindrique et comporte, à son extrémité aval, une première bride annulaire de solidarisation à une partie fixe 15 de la turbomachine.

Comme explicité par la figure 2, le palier de guidage en rotation 10 présente en outre :
- une bague de maintien de palier 16 portée par ledit support de palier annulaire 14, radialement agencée entre le support de palier annulaire 14 et l'arbre 12,
- un anneau de roulement 18, agencé radialement entre le support de palier annulaire 14 et la bague de maintien de palier 16.

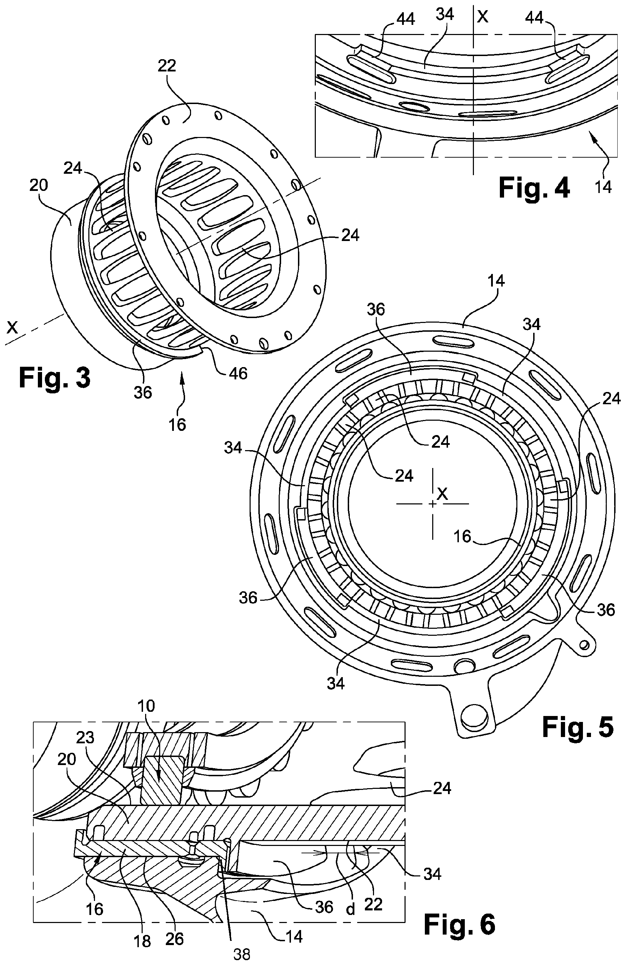

Comme visible sur les figures 2 et 3, cette bague de maintien de palier 16 s'étend suivant l'axe longitudinal X. La bague de maintien de palier 16 se présente en deux parties. Selon le présent exemple, ces deux parties sont venues de matière. La bague de maintien de palier 16 comporte ainsi une première partie, dite bague amont 20, destinée à être mise en contact avec le support de palier annulaire 14 et une seconde partie, dite une bague aval 22, élastiquement déformable, destinée à être rendue solidaire de la partie fixe 15 de la turbomachine.

La bague aval 22 présente deux extrémités axiales et la bague aval 22 est fixée à la partie fixe 15 de la turbomachine par son extrémité aval. Cette extrémité aval de la bague aval 22 est fixée à la partie fixe 15 de la turbomachine au moyen d'une seconde bride annulaire de solidarisation à laquelle ladite extrémité aval de la bague aval peut, par exemple, être boulonnée.

La bague amont 20 forme une bague extérieure annulaire du palier de guidage 10. Ce dernier comprend également une bague intérieure annulaire (non représentée) qui est montée sur l'arbre rotatif 12 (arbre haute pression). La bague intérieure est frettée sur l'arbre 12 de manière à empêcher toute translation et toute rotation de celle-ci. Des éléments roulants sont agencés entre la partie formant bague extérieure et la bague intérieure. Ces éléments roulants peuvent comprendre notamment des rouleaux ou des billes. La bague amont 20 est destinée à être mise en contact avec au moins un élément roulant du palier 10, ici un ensemble de rouleaux R. La bague amont 20 comprend une face externe qui forme donc piste de roulement 23 du palier 10. La bague intérieure comprend également une face interne formant piste de roulement.

Plus particulièrement, la bague amont 20 présente un profil continu sensiblement en O d'axe de révolution X là où la bague aval 22 présente un profil sensiblement en I, présentant un col amont et un col aval à chacune de ses extrémités axiales. Au moins une lumière peut être ménagée dans la col aval, de manière à permettre la fixation de l'extrémité aval de la bague aval 22 à la seconde bride annulaire de solidarisation à la partie fixe 15 de la turbomachine au moyen de boulons ou de vis, par exemple.

Afin de permettre à la bague aval 22 de se déformer, plusieurs lumières axiales y sont ménagées de manière à définir, entre elles, des colonnettes 24 longitudinales régulièrement réparties autour de l'axe longitudinal X de la turbomachine. Ces colonnettes 24 sont élastiquement déformables selon une direction axiale et/ou radiale et permettent ainsi une ovalisation de la bague aval 22. Lorsque la turbomachine est en fonctionnement, cette bague aval 22 se déforme, permettant un décentrage du palier 10, par exemple sous l'effet d'un balourd. Ceci permet alors, de manière connue, la reprise des charges radiales provoquées par ledit balourd.

L'anneau de roulement 18 est, plus particulièrement, agencé autour de la bague amont 20 de la bague de maintien de palier 16. Cet anneau de roulement 18 est rigide et assure une fonction d'amortisseur à compression en permettant l'agencement d'un film d'huile (non représenté) à l'interface 26 de la bague de maintien de palier 16 et du support de palier annulaire 14. Ce film d'huile s'étendant ainsi à la surface externe de la bague de maintien de palier 16, il permet d'absorber une partie des vibrations subies par la bague de maintien de palier 16 et d'en limiter la transmission au support de palier annulaire 14. Le film d'huile d'amortissement est prévu dans une chambre d'amortissement annulaire. Cette dernière est située radialement entre l'anneau de roulement 18 et la bague amont 20. La chambre d'amortissement est délimitée radialement par la surface externe de la bague amont 20 et la surface interne de l'anneau de roulement 18 et axialement par deux joints d'étanchéités annulaires 28a, 28b. De manière avantageuse, mais non limitativement, les joints d'étanchéités 28a, 28b sont positionnés dans des gorges annulaires ménagées dans la bague amont 20. Les gorges sont localisées à proximité de ses extrémités axiales amont et aval, comme visible sur la figure 2. Les extrémités amont et aval sont opposées axialement. Entre les deux joints d'étanchéité 28a, 28b, la surface externe de la bague amont 20 présente une gorge de distribution d'huile 30 alimentée par un conduit 32. Cette gorge de distribution d'huile 30 est située sensiblement au droit de la surface externe de la bague amont 20 et permet une distribution uniforme de l'huile sur toute ladite surface externe et de former un film d'huile d'épaisseur uniforme. En particulier, l'anneau de roulement 18 comprend un orifice 18a (voir figure 2) qui traverse la paroi de l'anneau de roulement 18 de part et d'autre suivant l'axe radial. L'orifice débouche 18a dans la gorge de distribution 30. De même, le conduit 32 débouche dans l'orifice 18a de l'anneau de roulement 18.

Comme mentionné plus haut, lorsque la déformation subie par la bague aval 22 dépasse un certain seuil, l'une ou plusieurs des colonnettes 24 peut se rompre et mener ainsi à un déplacement axial, vers l'aval, de la bague de maintien de palier 16 et empêcher le bon fonctionnement de la turbomachine.

Comme visible sur la figure 2, le système selon la présente invention comporte des éléments de retenue axiale de la bague de maintien de palier 16 sur le support de palier annulaire 14 en cas de rupture de l'une ou plusieurs des colonnettes 24 de la bague aval 22. En effet, le support de palier annulaire 14 comporte au moins un premier élément de retenue axiale 34 et la bague de maintien de palier 16 comporte au moins un second élément de retenue axiale 36. Ces premier et deuxième éléments 34, 36 sont configurés pour coopérer entre eux de manière à retenir axialement la bague de maintien de palier 16 en cas d'endommagement de la bague avale 22. Ces premier et seconds éléments de retenue axiale sont respectivement venus de matière avec le support de palier et la bague de maintien 16.

Par endommagement on entend, par exemple, la rupture ou la déformation d'une ou plusieurs colonnettes 24 comme décrit plus haut. A partir d'un nombre donné de colonnettes 24 rompues ou déformées, la bague aval 22 n'est plus fonctionnelle et ne permet plus de solidariser la bague amont 20 à la partie fixe 15 de la turbomachine de manière satisfaisante.

Selon le présent mode de réalisation présenté ici, les éléments de retenue axiale 34, 36 se présentent chacun sous la forme d'au moins une dent annulaire 34, 36. En particulier, une première dent annulaire 34 est portée par une extrémité aval du support de palier 14. Nous comprenons que chaque dent annulaire est venue de matière avec le support de palier 14. La première dent annulaire 34 fait saillie, de manière sensiblement perpendiculaire à l'axe X, depuis une surface interne du support de palier 14 vers l'intérieur de la turbomachine, comme visible sur la figure 4. Une seconde dent annulaire 36 est portée par une extrémité aval de la bague amont 20. De même, la seconde dent annulaire 36 fait saillie, de manière sensiblement perpendiculaire à l'axe X, depuis la surface externe de la bague amont 20 vers l'extérieur de la turbomachine, comme visible sur les figures 2 et 3. De même, nous comprenons que chaque dent annulaire est venue de matière avec la bague amont. On peut voir sur la figure 5 notamment, que dans le cas présent, la bague de maintien de palier 16 et le support de palier annulaire 14 comportent chacun trois dents annulaires 34, 36 réparties de manière régulière autour de l'axe longitudinal X. Les dents annulaires 34 du support de palier 14 et les dents annulaires 36 de la bague de maintien de palier 16 peuvent donc coopérer axialement entre elles (une première dent annulaire 34 avec une seconde dent annulaire 36 respectivement) de manière à former liaison crabot. Une telle configuration empêche un glissement vers l'aval de la bague amont 20 en cas d'endommagement de la bague aval 22, comme il a été défini plus haut et comme sera vu plus loin.

Comme illustré sur la figure 6, l'anneau de roulement 18 comporte lui aussi au moins une dent annulaire 38. Cette dent annulaire 38 est, par exemple, continue sur toute la circonférence de l'anneau de roulement 18. Elle fait radialement saillie depuis l'extrémité aval de l'anneau de roulement 18 vers l'extérieur de la turbomachine. Cette dent annulaire 38 permet ainsi d'une part de bloquer axialement le support de palier 14 (voir figure 2) et d'autre part, de coopérer axialement avec l'ensemble de dents 36 de la bague de maintien de palier 16 de manière à former liaison crabot. La dent annulaire 38 permet en outre de servir d'appui amont à l'ensemble de dents annulaires 36 de la bague de maintien de palier 16 lorsque celle-ci n'est pas endommagée et est en position fonctionnelle. Ainsi, l'ensemble de dents annulaires 36 de la bague de maintien de palier 16 est agencé axialement entre l'ensemble de dents 34 du support de palier annulaire 14 et la dent annulaire 38 de l'anneau de roulement 18.

Lorsque la turbomachine est en état de fonctionnement normal, les premières dents annulaires 34 du support de palier 14 sont chacune agencées à une distance d (voir figure 6) en aval de l'ensemble de secondes dents annulaires 36 de la bague de maintien de palier 16. La distance d définit l'écart fonctionnel garantissant le bon positionnement de la bague amont 20 et donc de la piste de roulement 23 par rapport à l'ensemble de rouleaux R du palier 10. Il sera expliqué plus loin comment, en cas d'endommagement de la bague aval 22, la distance d est maintenue entre les ensembles de dents annulaires 34, 36.

Comme notamment visible sur la figure 5, chacune des dents annulaires 34, 36 du système de retenue axiale tel que décrit ici, s'étend circonférentiellement selon un plan sensiblement perpendiculaire à l'axe longitudinale X et comporte ainsi deux extrémités circonférentielles opposées. Les dents annulaires 34, 36 ne présentent pas toutes la même longueur circonférentielle. Au moins une dents annulaires 34, 36 peut présenter une longueur circonférentielle différente de la longueur circonférentielle des autres dents annulaires 34, 36. Plus particulièrement, chacune des dents 34, 36 présente une longueur circonférentielle propre permettant de réduire sensiblement les possibilités de perte de la fonction de centrage du palier 10 : une seule position angulaire de la bague amont 20 par rapport au support de palier 14 permet à la bague amont 20 de traverser axialement le profil denté aval du support de palier 14 et d'empêcher un retour à un écart d entre les dents 34, 36.

Chacune de ces extrémités circonférentielles de chacune des dents annulaires 34, 36 du système revendiqué comporte un chanfrein 44, 46, comme visible sur les figures 3 et 4. Plus particulièrement, les extrémités circonférentielles de chacune des dents 34 du support de palier 14 présente un chanfrein 44 sur une face amont et chacune des extrémités circonférentielles de chacune des dents 36 de la bague de maintien de palier 16 présente un chanfrein 46 sur une face aval. Chaque chanfrein 44 des extrémités circonférentielles des dents annulaires 34 du support de palier 14 se positionne donc en regard d'un chanfrein 46 d'une extrémité circonférentielle des dents annulaires 36 de la bague de maintien de palier 16.

Lorsque la turbomachine est en fonctionnement et que la bague aval 22 est endommagée par exemple pour une des raisons citées plus haut, celle-ci peut subir soit une compression axiale entraînant un glissement de la bague amont 20 vers l'aval de la turbomachine, soit, si un nombre très important de colonnettes 24 sont endommagées, se désolidariser de la bague amont 20 qui peut alors là aussi être entraînée vers l'aval de la turbomachine. Si le déplacement de la bague amont 20 est supérieur à la distance d, il y a perte de la fonction de support de l'arbre 12 et le palier 10 ne fonctionne plus.

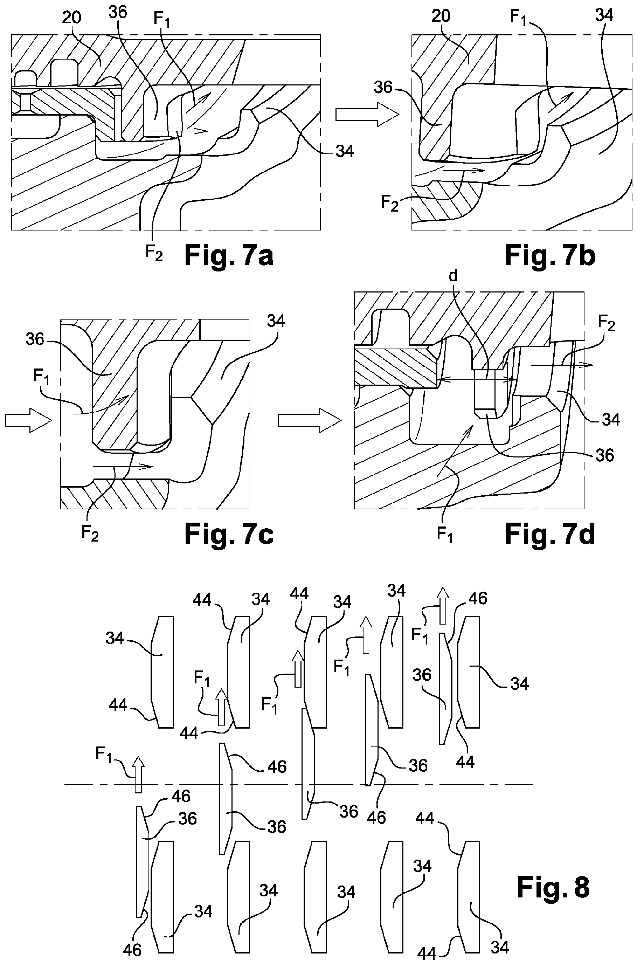

Lorsque la bague amont 20 est désolidarisée de la bague aval 22 dû à une rupture des colonnettes 24, la bague amont 20 est alors mise en rotation F1 atour de l'ensemble de rouleaux R du palier 10, comme indiqué sur la figure 7a. En parallèle de ce mouvement rotatif F1, la bague amont 20 subit un mouvement axial F2 l'entraînant vers l'aval de la turbomachine. Ce mouvement axial F2 est limité à la distance d grâce aux ensembles de dents annulaires 34, 36. En effet, lorsque la bague amont 20 s'est déplace de la distance d, l'ensemble de dents annulaires 36 de la bague de palier 16 entre en contact avec l'ensemble de dents annulaire 34 du support de palier 14 et le mouvement F2 vers l'aval de la bague amont 20 est ainsi bloqué. D'une part, le contact chanfreins- chanfreins 44, 46 limite le choc lors de la collision des dents annulaires 36 contre les dents annulaires 34 et, d'autre part, le contact chanfreins-chanfreins 44, 46 induit un mouvement de recul axial de la bague amont 20, permettant de maintenir la bague amont 20 dans sa position fonctionnelle en évitant de nouveaux endommagements, comme visible sur la figure 8.

Comme mentionné plus haut, le fait que chaque dent annulaire 34, 36 présente une longueur différente diminue fortement la probabilité que la bague amont 20 puisse passer au travers du profil denté aval du support de palier 14 et se déplacer d'une distance supérieure à la distance d.

## Revendications

1. Système de retenue axiale d'une bague de maintien de palier de guidage en rotation d'un arbre rotatif (12) d'une turbomachine s'étendant suivant un axe longitudinal (X), le système de retenue comportant :
- un support de palier annulaire (14) destiné à être solidarisé avec une partie fixe (15) de la turbomachine, et
- une bague de maintien de palier (16) portée par le support de palier annulaire (14), la bague de maintien de palier (16) s'étendant suivant l'axe longitudinal (X) et comportant une partie amont, dite bague amont (20) destinée à être mise en contact avec le support de palier (14) et une partie avale dite bague aval (22) élastiquement déformable et destinée à être reliée à la partie fixe (15),
le support de palier (14) comportant un premier élément de retenue axiale (34) et la bague de maintien de palier (16) comportant un second élément de retenue axiale (36), le premier et deuxième élément de retenue axiale (34, 36) étant configurés pour coopérer entre eux de manière à retenir axialement la bague de maintien de palier (16) en cas d'endommagement de la bague aval (22), **caractérisé en ce que** le premier et second élément de retenue axiale (34, 36) présentent chacun au moins une dent annulaire (34, 36) s'étendant suivant un axe radial sensiblement perpendiculaire à l'axe longitudinal (X) de manière à pouvoir coopérer entre elles axialement et à former liaison crabot.

2. Système de retenue axiale selon la revendication précédente, **caractérisé en ce que** chacune des dents annulaires (36) du premier élément de retenue s'étend radialement vers l'extérieur de la turbomachine et **en ce que** chacune des dents annulaires (34) du deuxième élément de retenue s'étend radialement vers l'intérieur de la turbomachine.

3. Système de retenue axiale selon l'une quelconque des revendications précédentes, **caractérisé en ce que** l'au moins un premier élément de retenue axiale (34) du support de palier annulaire (14) est agencé en aval de l'au moins un second élément de retenue axiale (36) de la bague de maintien de palier (16).

4. Système de retenue axiale selon l'une quelconque des revendication précédentes, **caractérisé en ce que** chaque élément de retenue axiale (34, 36) du support de palier (14) et de la bague de maintien de palier (16) s'étend circonférentiellement selon un plan sensiblement perpendiculaire à l'axe longitudinale (X) et comporte deux extrémités circonférentielles, les extrémités circonférentielles de chaque premier élément de retenue axiale (34) du support de palier (14) comportant, en outre, sur leurs faces amont, chacune un chanfrein (44).

5. Système de retenue axiale selon la revendication précédente, **caractérisé en ce que** les extrémités circonférentielles de chaque second élément de retenue axiale (36) de la bague de maintien de palier (16) comportent, en outre, sur leurs faces aval, chacune un chanfrein (46) de manière à coopérer avec chacun des chanfreins (44) de chacun des premier éléments de retenue axiale (34) du support de palier (14).

6. Système de retenue axiale selon l'une quelconque des revendications 4 ou 5, **caractérisé en ce qu'**au moins un des éléments de retenue axiale (34, 36) présente une longueur circonférentielle différente de la longueur circonférentielle des autres éléments de retenue axiale (34, 36).

7. Système de retenue axiale selon l'une quelconque des revendications précédentes, **caractérisé en ce que** le système comporte en outre un anneau de roulement (18), agencé radialement entre le support de palier annulaire (14) et la bague de maintien de palier (16), l'anneau de roulement (18) comportant au moins une dent annulaire (38) s'étendant radialement de manière à pouvoir coopérer axialement avec l'au moins un second élément de retenue axiale (36) de la bague de palier, de manière à former liaison crabot.

8. Système de retenue axiale selon la revendication précédente, **caractérisé en ce que** l'au moins un second élément de retenue axiale (36) de la bague de maintien de palier (16) est agencée axialement entre l'au moins un premier élément de retenue axiale (34) du support de palier annulaire (14) et l'au moins une dent annulaire (38) de l'anneau de roulement (18).

9. Turbomachine d'aéronef comportant un système de retenue axiale d'une bague de roulement de palier (16), selon l'une quelconque des revendications précédentes.

## Patentansprüche

1. System zur axialen Sicherung eines Lagerhalterings zur drehenden Führung einer drehbaren Welle (12) einer Turbomaschine, die sich entlang einer Längsachse (X) erstreckt, wobei das Sicherungssystem umfasst:
- eine ringförmige Lagerstütze (14), die dazu vorgesehen ist, fest mit einem festen Teil (15) der Turbomaschine verbunden zu werden, und
- einen Lagerhaltering (16), der von der ringförmigen Lagerstütze (14) getragen wird, wobei der Lagerhaltering (16) sich entlang der Längsachse (X) erstreckt und einen stromaufwärtigen Teil, als stromaufwärtigen Ring (20) bezeichnet, der dazu vorgesehen ist, mit der Lagerstütze (14) in Kontakt gebracht zu werden, und einen stromabwärtigen Teil umfasst, als stromabwärtigen Ring (22) bezeichnet, der elastisch verformbar ist und dazu vorgesehen ist, mit dem festen Teil (15) verbunden zu werden,
wobei die Lagerstütze (14) ein erstes Element zur axialen Sicherung (34) umfasst und der Lagerhaltering (16) ein zweites Element zur axialen Sicherung (36) umfasst, wobei das erste und das zweite Element zur axialen Sicherung (34, 36) dazu ausgelegt sind, miteinander zusammenzuwirken, sodass sie im Falle einer Beschädigung des stromabwärtigen Rings (22) den Lagerhaltering (16) axial sichern, **dadurch gekennzeichnet, dass** das erste und das zweite Element zur axialen Sicherung (34, 36) jeweils mindestens einen ringförmigen Zahn (34, 36) umfasst, der sich entlang einer radialen Achse im Wesentlichen senkrecht zur Längsachse (X) erstreckt, sodass sie axial miteinander zusammenwirken können und eine Klauenverbindung bilden.

2. System zur axialen Sicherung nach dem vorstehenden Anspruch, **dadurch gekennzeichnet, dass** jeder der ringförmigen Zähne (36) des ersten Sicherungselements sich radial zur Außenseite der Turbomaschine erstreckt und dadurch, dass jeder der ringförmigen Zähne (34) des zweiten Sicherungselements sich radial zur Innenseite der Turbomaschine erstreckt.

3. System zur axialen Sicherung nach einem der vorstehenden Ansprüche, **dadurch gekennzeichnet, dass** das mindestens eine erste Element zur axialen Sicherung (34) der ringförmigen Lagerstütze (14) stromabwärts des mindestens einen zweiten Elements zur axialen Sicherung (36) des Lagerhalterings (16) eingerichtet ist.

4. System zur axialen Sicherung nach einem der vorstehenden Ansprüche, **dadurch gekennzeichnet, dass** jedes Element zur axialen Sicherung (34, 36) der ringförmigen Lagerstütze (14) und des Lagerhalterings (16) sich in Umfangsrichtung entlang einer zur Längsachse (X) im Wesentlichen senkrechten Ebene erstreckt und zwei Umfangsenden umfasst, wobei die Umfangsenden jedes ersten Elements zur axialen Sicherung (34) der Lagerstütze (14) weiter auf ihren stromaufwärtigen Seiten jeweils eine Fase (44) umfassen.

5. System zur axialen Sicherung nach dem vorstehenden Anspruch, **dadurch gekennzeichnet, dass** die Umfangsenden jedes zweiten Elements zur axialen Sicherung (36) des Lagerhalterings (16) weiter auf ihren stromabwärtigen Seiten jeweils eine Fase (46) umfassen, sodass sie mit jeder der Fasen (44) jedes der ersten Elemente zur axialen Sicherung (34) der Lagerstütze (14) zusammenwirken.

6. System zur axialen Sicherung nach einem der Ansprüche 4 oder 5, **dadurch gekennzeichnet, dass** mindestens eines der Elemente zur axialen Sicherung (34, 36) eine Umfangslänge aufweist, die sich von der Umfangslänge der anderen Elemente zur axialen Sicherung (34, 36) unterscheidet.

7. System zur axialen Sicherung nach einem der vorstehenden Ansprüche, **dadurch gekennzeichnet, dass** das System weiter einen Wälzlagerring (18) umfasst, der radial zwischen der ringförmigen Lagerstütze (14) und dem Lagerhaltering (16) eingerichtet ist, wobei der Wälzlagerring (18) mindestens einen ringförmigen Zahn (38) umfasst, der sich radial erstreckt, sodass er axial mit dem mindestens einen zweiten Element zur axialen Sicherung (36) des Lagerrings zusammenwirken kann, sodass eine Klauenverbindung gebildet wird.

8. System zur axialen Sicherung nach dem vorstehenden Anspruch, **dadurch gekennzeichnet, dass** das mindestens eine zweite Element zur axialen Sicherung (36) des Lagerhalterings (16) axial zwischen dem mindestens einen ersten Element zur axialen Sicherung (34) der ringförmigen Lagerstütze (14) und dem mindestens einen ringförmigen Zahn (38) des Wälzlagerrings (18) eingerichtet ist.

9. Turbomaschine eines Luftfahrzeugs, umfassend ein System zur axialen Sicherung eines Lagerwälzlagerrings (16) nach einem der vorstehenden Ansprüche.

## Claims

1. A system for the axial retention of a holding ring for a bearing for guiding in rotation a rotary shaft (12) of a turbomachine extending along a longitudinal axis (X), the retention system comprising:
- an annular bearing support (14) intended to be secured to a fixed part (15) of the turbomachine, and
- a bearing holding ring (16) carried by the annular bearing support (14), the bearing holding ring (16) extending along the longitudinal axis (X) and comprising an upstream part, called the upstream ring (20), intended to be brought into contact with the bearing support (14) and a downstream part, called the downstream ring (22), that is elastically deformable and intended to be connected to the fixed part (15),
the bearing support (14) comprises a first axial retention element (34) and the bearing holding ring (16) comprises a second axial retention element (36), and that the first and second axial retention elements (34, 36) are configured to cooperate with each other so as to axially retain the bearing holding ring (16) in the event of damage to the downstream ring (22), **characterised in that** the first and second axial retention elements (34, 36) each have at least one annular tooth (34, 36) extending along a radial axis substantially perpendicular to the longitudinal axis (X) so as to be able to cooperate with each other axially and to form a snap connection.

2. The system for the axial retention according to the preceding claim, **characterised in that** each of the annular teeth (36) of the first retention element extends radially towards the outside of the turbomachine and **in that** each of the annular teeth (34) of the second retention element extends radially towards the inside of the turbomachine.

3. The system for the axial retention according to any one of the preceding claims, **characterised in that** the at least one first axial retention element (34) of the annular bearing support (14) is arranged downstream of the at least one second axial retention element (36) of the bearing holding ring (16).

4. The system for the axial retention according to any one of the preceding claims, **characterised in that** each axial retention element (34, 36) of the bearing support (14) and of the bearing holding ring (16) extends circumferentially in a plane substantially perpendicular to the longitudinal axis (X) and comprises two circumferential ends, the circumferential ends of each first axial retention element (34) of the bearing support (14) also comprising each a chamfer (44) on their upstream faces.

5. The system for the axial retention according to the preceding claim, **characterised in that** the circumferential ends of each second axial retention element (36) of the bearing holding ring (16) furthermore comprise, on their downstream faces, each a chamfer (46) so as to cooperate with each of the chamfers (44) of each of the first axial retention elements (34) of the bearing support (14).

6. The system for the axial retention according to any one of claims 4 or 5, **characterised in that** at least one of the axial retention elements (34, 36) has a circumferential length different from the circumferential length of the other axial retention elements (34, 36).

7. The system for the axial retention according to any one of the preceding claims, **characterised in that** the system further comprises a rolling annulus (18), arranged radially between the annular bearing support (14) and the bearing holding ring (16), the rolling annulus (18) comprising at least one annular tooth (38) which is extending radially so as to be able to cooperate axially with the at least one second axial retention element (36) of the bearing ring, so as to form a snap connection.

8. The system for the axial retention according to the preceding claim, **characterised in that** the at least one second axial retention element (36) of the bearing holding ring (16) is arranged axially between the at least one first axial retention element (34) of the annular bearing support (14) and the at least one annular tooth (38) of the rolling annulus (18).

9. An aircraft turbomachine comprising a system for the axial retention of a bearing rolling ring (16), according to any one of the preceding claims.
